# EUROPEAN PATENT SPECIFICATION

(11) **EP 1 842 735 B1**
(45) Date of publication and mention of the grant of the patent: **08.08.2012**
(21) Application number: 07006277.3
(22) Date of filing: 27.03.2007
(51) Int. Cl.: B60R 21/015

(54) **Object detecting system, actuating device control system, vehicle, and object detecting method**
Objekterkennungssystem, Kontrollsystem für Betätigungsvorrichtung, Fahrzeug und Objekterkennungsverfahren
Système de détection d'objet, système de commande de dispositif d'actionnement, véhicule et procédé de détection d'objet

(30) Priority: 04.04.2006 JP 2006103595
(43) Date of publication of application: 10.10.2007
(73) Proprietor: TAKATA CORPORATION, Minato-ku, Tokyo 106-8510 (JP)
(72) Inventor: Aoki, Hiroshi, c/o Takata Corporation, Tokyo 106-8510 (JP); Yokoo, Masato, c/o Takata Corporation, Tokyo 106-8510 (JP); Hakomori, Yuu, c/o Takata Corporation, Tokyo 106-8510 (JP)
(74) Representative: Banzer, Hans-Jörg

(56) References cited:
- EP-A- 1 837 805
- WO-A-03/089277
- WO-A-2004/081850

## Description

The present invention relates to an occupant information detecting system to be installed in a vehicle and, more particularly, to a technology for detecting information about objects on vehicle seats.

Conventionally, there are known various technologies for detecting information about an object occupying a vehicle seat by using a photographing means such as a camera. For example, disclosed in Japanese Patent Unexamined Publication No. 2003-294855 is a configuration of an occupant detecting apparatus in which a single camera arranged in front of a vehicle occupant is used to detect the position of the vehicle occupant. WO 2004/081850 A discloses as well a system according to the preamble of Claim 1.

### Problems to be solved by the Invention

By the way, it is known that an apparatus for detecting information about a vehicle occupant by using a camera like the occupant detecting apparatus disclosed in the aforementioned Japanese Patent Unexamined Publication No. 2003-294855 has a problem that the brightness of lens is decreased as the viewing angle of the camera is increased and a problem that a peripheral area is distorted as compared to a central area. Therefore, in case of using a single camera to detect a plurality of occupants at once, the detection accuracy of detecting information about the vehicle occupants is deteriorated due to the darkness and distortion of image resulting from the characteristics of lens. For this, an expensive camera is required. On the other hand, in case of using a camera having a narrow viewing angle for the purpose of improving the detection accuracy, the number of vehicle occupants which the camera can detect is reduced so that a problem that it is difficult to detect information about a predetermined number of vehicle occupants arises. Specifically, while a single camera with limited viewing angle can detect information about a front passenger seat, it may be difficult for the camera to detect information about both the driver seat and the front passenger seat at once. In this case, it is required to use a plurality of cameras. It is therefore desired, in designing such a detection system, to provide a technology of conducting a setting for a viewing field which is effective in detecting required information about objects while using a camera with a limited viewing angle for cost reduction.

The present invention is made in view of the aforementioned point and it is an object of the present invention to provide a technology, relating to an object detecting system for detecting information about objects on vehicle seats by using a camera, which is effective for conducting a rationalized setting for the viewing field of the camera having a single view point.

### Means to solve the Problems

According to the invention, this object is achieved by an object detecting system as defined in claim 1, an object device control system as defined in claim 6, a vehicle as defined in claim 7, and an object detecting method as defined in claim 8. The dependent claims define preferred and advantageous embodiments of the invention.

For achieving the object, the present invention is configured. Though the present invention is typically adapted to an object detecting system in an automobile for detecting information about objects on vehicle seats, the present invention can be also adapted to a technology for developing an object detecting system in a vehicle other than the automobile such as airplane, boat, train, bus, and the like.

The object detecting system of the invention is an object detecting system for detecting information about objects on vehicle seats and comprises at least a camera and a processing means. The "object" here used includes a vehicle occupant, an object placed on a vehicle seat, a child seat, and a junior seat. In the present invention, the "information about the object" widely includes information about presence, the size, the position, and the attitude of the object. When the object is a vehicle occupant, the information about the object includes the presence of a vehicle occupant, the size (physique class) of the vehicle occupant, the position of the vehicle occupant, the positions and configurations of body parts of the vehicle occupant, and the attitude of the vehicle occupant.

The camera of this invention is a means (photographing means or imaging means) for taking images from a single view point in a cabin of a vehicle toward a rear side of the vehicle. The view point of the camera may be positioned in front of the front seats toward the rear side of the vehicle or positioned over the front seats toward the rear side of the vehicle. The "single view point" used here means a style where the number of installation places of the camera is one, that is, a single camera is mounted at a single place. As the camera capable of taking images from a single view point, a 3-D type monocular C-MOS camera or a 3-D type pantoscopic stereo camera may be employed. In addition, 2-D type camera may also be employed. In this invention, images of the objects on the vehicle seats are taken by the camera capable of taking images from the single view point. In case of identifying the presence, the size, the position, and the attitude of the object based on three-dimensional images of the object, a 3-D type monocular C-MOS camera or a 3-D type pantoscopic stereo camera may be employed. In case of detecting only the presence or absence and the outer profile (outline) of the object, a 2-D type camera may be employed.

The processing means of this invention is a means for deriving information about the objects on the vehicle seats based on images taken by the camera. Information about the objects on the vehicle seats is derived by this processing means. In this invention, the processing means has an image processing function of controlling the camera to obtain good quality images and for controlling the image processing for processing the taken images for analysis and a storing function of storing (recording) an operation control software, data for correction, buffer frame memory for preprocessing, defined data for recognition computing, and reference patterns.

Especially in the present invention, as for the structure of the camera, the viewing field of the camera covers an area defined between a first sight line extending from the single view point toward the rear side of the vehicle through a front-passenger-side shoulder area of an occupant sitting in the driver seat and a second sight line extending from the single view point toward the rear side of the vehicle through a door side shoulder area of an occupant sitting in the front passenger seat. In this case, the viewing field of the camera may be any field including the area defined between the first sight line and the second sight line so that the viewing field of the camera may be a field exactly corresponding to the aforementioned area or a field wider than the field including the aforementioned area. According to the viewing field, an occupant on the front passenger seat, as an example of the object on the front passenger seat, is covered by the viewing field. According to the viewing field, a front-passenger-side shoulder portion of an occupant on the driver seat, as an example of the object on the driver seat, is covered by the viewing field. That is, the object on the front passenger seat is all covered by the viewing field of the camera, while the object on the driver seat is partly covered by the viewing field.

The "front-passenger-side shoulder area of an occupant sitting in the driver seat" is defined as an area corresponding to the front passenger-side (vehicle inner side) shoulder portion of the occupant from the center of the occupant sitting in the driver seat. In case that a driver seat is on the right-hand side of a vehicle (in case of a vehicle with right-hand steering wheel), an area where the left shoulder portion of the occupant sitting in the driver seat is positioned corresponds to the "front-passenger-side shoulder area of an occupant sitting in the driver seat". On the other hand, in case that the driver seat is on the left-hand side of a vehicle (in case of a vehicle with left-hand steering wheel), an area where the right shoulder portion of the occupant sitting in the driver seat is positioned corresponds to the "front-passenger-side shoulder area of an occupant sitting in the driver seat". The portion substantially coincides with an inner side end portion of the driver seat.

On the other hand, the "door side shoulder area of an occupant sitting in the front passenger seat" is defined as an area corresponding to the door-side (vehicle outer side) shoulder portion of the occupant from the center of the occupant sitting in the front passenger seat. In case that a driver seat is on the right-hand side of a vehicle (in case of a vehicle with right-hand steering wheel), an area where the left shoulder portion of the occupant sitting in the front passenger seat is positioned corresponds to the "door-side shoulder area of an occupant sitting in the front passenger seat". On the other hand, in case that the driver seat is on the left-hand side of a vehicle (in case of a vehicle with left-hand steering wheel), an area where the right shoulder portion of the occupant sitting in the front passenger seat is positioned corresponds to the "door-side shoulder area of an occupant sitting in the front passenger seat". The portion substantially coincides with a door-side end portion of the front passenger seat.

It should be understood that the "shoulder" and "shoulder portion" in the present invention is defined as an area from the root of the neck to the shoulder of the occupant.

In case of detecting information about the object by using the camera, it is known that the brightness of lens is decreased as the viewing angle of the camera is increased and that a peripheral area is distorted as compared to a central area. Therefore, in case of using a single camera to detect a plurality of objects at once, the detection accuracy is deteriorated due to the darkness and distortion of image resulting from the characteristics of lens. For this, an expensive camera is required. On the other hand, in case of using a camera having a narrow viewing angle for the purpose of improving the detection accuracy, the number of objects which the camera can detect is reduced so that a problem that it is difficult to detect information about a predetermined number of objects arises. For this, in the present invention, the viewing field is set such that an object on the front passenger seat is all covered by the viewing field, while the object on the driver seat is partly covered by the viewing field. That is, the entire viewing angle of the camera is limited as much as possible and a larger part of the limited viewing field is allocated to the object on the front passenger seat than the object on the driver seat.

According to the setting for the viewing field, the viewing angle of the camera is limited, thereby reducing the cost and improving the detection accuracy of the object. In addition, a larger part of the limited viewing field is allocated to the object on the front passenger seat, thereby obtaining more information about the object on the front passenger seat than the object on the driver seat. This is because occupants to be sitting in the front passenger seat may be a great variety of occupants including infants and adults while occupants to be sitting in the driver seat are essentially adults so it is rational to increase detected information about the front passenger seat than that about the driver seat.

Therefore, according to this structure of the object detecting system of the invention, the viewing angle of the camera is limited, thereby reducing the cost and improving the detection accuracy of the object. By making an effective use of the limited field, desired information about the object can be obtained and rationalized setting for the viewing field of the camera is achieved.

Information about the object(s) detected by the object detecting system of this invention is suitably used for controlling an occupant restraining means for restraining a vehicle occupant, such as an airbag device, a seat belt device, and a warning apparatus for outputting warning signals (display, sound and so on). As far as the "single view point" is concerned, this invention comprises a single camera having a single view point which is set to take images toward vehicle seats and this invention is not intended to avoid installation of another camera or view point for another purpose.

According to a first embodiment of the object detecting system of the invention, a sight line passing through the center of the viewing field of the camera substantially coincides with an area about a driver-side shoulder portion of the occupant sitting in the front passenger seat. The central area of the viewing field is an area where image hardly becomes dark and is hardly distorted because of the characteristics of lens. The "driver-side shoulder portion of the occupant sitting in the front passenger seat" is defined as an area corresponding to the driver-side (vehicle inner side) shoulder portion of the occupant from the center of the occupant sitting in the front passenger seat. In case of a vehicle with right-hand steering wheel, an area where the right shoulder portion of the occupant sitting in the front passenger seat is positioned corresponds to the "driver-side shoulder portion of an occupant sitting in the front passenger seat". On the other hand, in case of a vehicle with left-hand steering wheel, an area where the left shoulder portion of the occupant sitting in the front passenger seat is positioned corresponds to the "driver-side shoulder area of an occupant sitting in the front passenger seat". The portion substantially coincides with an inner side end portion of the front passenger seat.

In case that the object is an occupant occupying the front passenger seat, the arrangement in which the area of the driver-side shoulder portion of the occupant sitting in the front passenger seat substantially coincides with the sight line passing through the center of the viewing field of the camera is substantially equal to an arrangement in which a half body of the occupant occupying the front passenger seat is in the central area of the viewing field of the camera, thereby increasing the detection accuracy of information about the occupant occupying the front passenger seat. This is based on the idea that since human being has substantially right-left symmetrical profile, accurate information about the entire body of the occupant can be detected as images of the half body of the occupant are detected with accuracy.

According to this structure of the object detecting system, desired information about objects can be further accurately detected.

According to a second embodiment of the object detecting system of the invention, the viewing angle of the viewing field of the camera when seen from above is set to be lower than about 110 degrees.

According to the second embodiment, the viewing angle of the viewing field of the camera is set to be lower than about 110 degrees, thereby allowing the use of an inexpensive lens having average size and brightness and thus allowing the reduction in cost of the system.

The processing means may detect respective halves of the object on the driver seat and the object on the front passenger seat based on the images obtained by the camera having the viewing field defined between the first sight line and the second sight line and thereby may determine at least one of the presence, the size, the position, and the attitude of each object. Typically, whether the object is present or not is determined and when it is determined that the object is present, at least one of the size, the position, and the attitude of the object may be determined.

According to this feature of the object detecting system, at least one of the presence, the size, the position, and the attitude of each object can be determined by detecting respective halves of the object on the driver seat and the object on the front passenger seat, thereby achieving the rationalized system.

Each object on the vehicle seats may be identified at least based on distances from the camera to the surface of the object or the three-dimensional profile of the object.

According to this feature, the object on the vehicle seat can be identified by at least the distances from the camera to the surface of the object or the three-dimensional profile of the object.

An operation device control system of the invention comprises at least: an object detecting system as mentioned above, an operation device, and an actuation control means. The operation device is a device which is operated based on the information about the object occupying the vehicle seat derived by the processing means of the object detecting system. Examples of the operation device include a warning device for outputting warning signals, an occupant restraining device for restraining a vehicle occupant by an airbag and/or a seat belt, and a device for adjusting according to the attitude of the occupant (for example, a device of adjusting the level of a head rest of a seat). The actuation control means of this invention is a means for controlling the actuation of the operation device.

According to this structure, the operation device can be controlled to be actuated in a suitable mode according to detection results about the object by the processing means of the object detecting system, thereby enabling detailed control for the operation device.

A vehicle of the invention comprises at least: an engine/running system; an electrical system; an actuation control device; and an object detecting means. The engine/running system is a system involving an engine and a running mechanism of the vehicle. The electrical system is a system involving electrical parts used in the vehicle. The actuation control device is a device having a function of conducting the actuation control of the engine/running system and the electrical system. The object detecting means is a means for detecting information about an object occupying a vehicle seat. In this invention, the object detecting means comprises an object detecting system as described above.

According to this arrangement, there is provided a vehicle mounted with an object detecting system in which the viewing field of the camera can be reasonably set.

An object detecting method of the invention is a method of detecting information about objects on vehicle seats by using a camera capable of taking images from a single view point in a cabin of a vehicle toward a rear side of the vehicle. As regards the setting of the camera of this object detecting method, the viewing field of the camera is set to cover an area defined between a first sight line extending from the single view point toward the rear side of the vehicle through a front-passenger-side shoulder area of an occupant sitting in the driver seat and a second sight line extending from the single view point toward the rear side of the vehicle through a door-side shoulder area of an occupant sitting in the front passenger seat so that a larger part of the viewing field is allocated to an object on the front passenger seat than an object on the driver seat. As the camera used in this method, the same camera as a component of the object detecting system mentioned above can be used.

According to the object detecting method of the invention, the viewing angle of the camera is limited, thereby reducing the cost and improving the detection accuracy of the object. By making an effective use of the limited field, desired information about object can be obtained.

According to an embodiment of the object detecting method of the invention, a sight line passing through the center of the viewing field of the camera substantially coincides with an area about a driver-side shoulder of the occupant sitting in the front passenger seat. As the camera used in this embodiment, the same camera as a component of the first embodiment of the object detecting system can be used.

According to this feature, desired information about objects can be further accurately detected.

According to a further embodiment of the object detecting method of the invention, the viewing angle of the viewing field of the camera when seen from above is set to be lower than about 110 degrees. As the camera used in this embodiment, the same camera as a component of the second embodiment of the object detecting system can be used.

According to the structure of this embodiment of the object detecting method, the viewing angle of the camera is set to be lower than about 110 degrees, thereby allowing the use of an inexpensive lens having average size and brightness and thus allowing the reduction in cost of the system.

Respective halves of the object on the driver seat and the object on the front passenger seat may be detected based on the images obtained by the camera having the viewing field defined between the first sight line and the second sight line and at least one of the presence, the size, the position, and the attitude of each object may be determined based on the detected halves.

By using the embodiment of the object detecting method mentioned above, at least one of the presence, the size, the position, and the attitude of each object can be determined by detecting respective halves of the object on the driver seat and the object on the front passenger seat, thereby achieving the rationalized method.

Each object on the vehicle seats is identified at least based on distances from the camera to the surface of the object or the three-dimensional profile of the object.

Thereby, the object on the vehicle seat can be identified by at least the distances from the camera to the surface of the object or the three-dimensional profile of the object.

### Effects of the Invention

As described in the above, the present invention is an object detecting system for detecting information about objects on vehicle seats by using a camera having a single view point, wherein an object on a front passenger seat is all covered by the viewing field of the camera while an object on a driver seat is partly covered by the viewing field of the camera, thereby achieving rationalized setting for the viewing field of the camera.

### Brief Explanation of the drawings

Fig. 1 is an illustration showing an object detecting system 100 according to an embodiment which is installed in a vehicle.

Fig. 2 is a plan view of a viewing field of a camera 112 of the embodiment.

Fig. 3 is a view taken along a line a-a in a direction of arrows in Fig. 2.

### Best Modes for carrying out the Invention

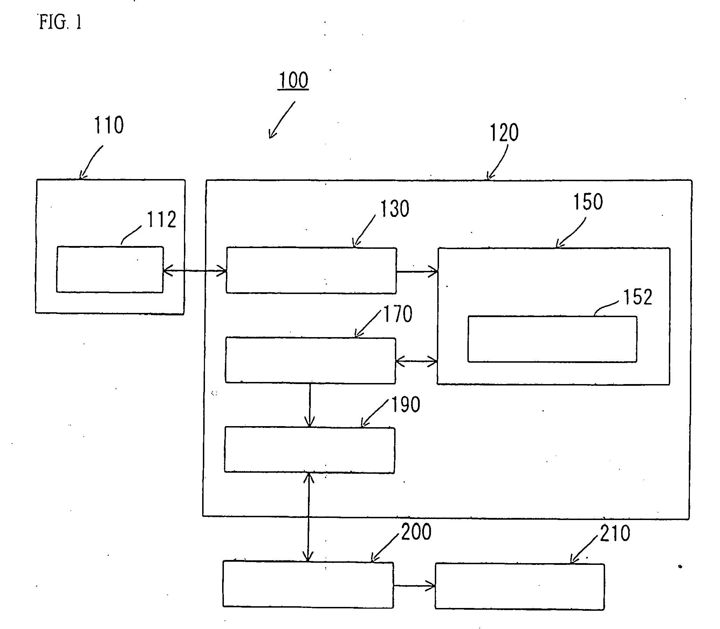

Hereinafter, description will be made as regard to embodiments of the present invention with reference to drawings. First, an object detecting system 100 as an embodiment of the "object detecting system (object detecting means)" according to the present invention will be described with reference to Fig. 1 through Fig. 3.

The structure of the object detecting system 100, which is installed in a vehicle, of this embodiment is shown in Fig. 1.

As shown in Fig. 1, the object detecting system 100 of this embodiment is installed in order to detect information about objects such as vehicle occupants in an automobile as the "vehicle" 10 of the present invention and mainly comprises a photographing means 110 and a control means 120. Further, the object detecting system 100 cooperates together with an ECU 200 as an actuation control device for the vehicle and an occupant restraining means 210 to compose an occupant restraint apparatus (corresponding to the "operation device control system" of the present invention) for restraining an occupant in the event of a vehicle collision. The vehicle comprises, but not shown, an engine/running system involving an engine and a running mechanism of the vehicle, an electrical system involving electrical parts used in the vehicle, and an actuation control device (ECU 200) for conducting the actuation control of the engine/running system and the electrical system.

The photographing means 110 of this embodiment comprises a camera 112 as the photographing device and a data transfer circuit. The camera 112 is a 3-D (three-dimensional) camera (sometimes called "monitor") of a C-MOS or CCD (charge-coupled device) type in which light sensors are disposed into an array (lattice) arrangement. By this camera 112, distances relative to the object are measured a plurality of times so as to detect a three-dimensional surface profile of the object which is used to identify the presence or absence, the size, the position, and the attitude of the object. That is, at least the distances from the camera 112 to the surface of the object or the three-dimensional surface profile of the object detected by the camera 112 may be employed for identifying the object. As the camera 112, a 3-D type monocular C-MOS camera or a 3-D type pantoscopic stereo camera may be employed. In case of detecting only the presence or absence and the outer profile (outline) of the object, a 2-D type camera may be employed instead of the 3-D type camera.

The camera 112 of this embodiment is mounted, in a suitable embedding manner, to an area around an inner rearview mirror, an area around a side mirror, a central portion in the lateral direction of a dashboard, or the like of the automobile in such a manner as to face one or a plurality of vehicle seats. By using the camera 112, information about object(s) on one or more of vehicle seats such as a driver seat, a front passenger seat, and a rear seat is measured periodically a plurality of times. Mounted on the object detecting system 100 of this embodiment is a power source unit for supplying power from a vehicle buttery to the camera 112, but not particularly illustrated. The camera 112 is set to start its photographing operation when the ignition key is turned ON or when a seat sensor (not shown) installed in the driver seat detects a vehicle occupant sitting in the driver seat.

The control means 120 of this embodiment further comprises at least an image processing means 130, a computing means (MPU) 150, a storing means 170, an input/output means 190, and peripheral devices (not shown). The control means 120 is a means of deriving information about the object on the vehicle seat based on images taken by the camera 112 and corresponds to the "processing means" of the present invention.

The image processing means 130 is a means for controlling the camera to obtain good quality images and for controlling the image processing for processing images taken by the camera 112 to be used for analysis. Specifically, as for the control of the camera, the adjustment of the frame rate, the shutter speed, and the sensitivity, and the accuracy correction are conducted to control the dynamic range, the brightness, and the white balance. As for the control of the image processing, the spin compensation for image, the correction for distortion of the lens, the filtering operation, and the difference operation as image preprocessing operations are conducted and the configuration determination and the trucking as image recognition processing operations are conducted.

The computing means 150 of this embodiment comprises at least an object information extracting section 152. The object information extracting section 152 carries out a process of extracting information about the object based on the information form the image processing means 130. Specifically, information about the presence, the size, the position, and the attitude of the object are extracted (derived). When the object is a vehicle occupant, the presence of a vehicle occupant, the size (physique class) of the vehicle occupant, the positions of the occupant's head, shoulder, and upper body, and whether the occupant is out-of-position (OOP) are extracted (derived).

The storage means 170 of this embodiment is a means for storing (recording) data for correction, buffer frame memory for preprocessing, defined data for recognition computing, reference patterns, and the computed results of the computing means 150 a well as an operation control software.

The input/output means 190 of this embodiment inputs information about the vehicle, information about traffic conditions around the vehicle, information about weather condition and about time zone, and the like to the ECU 200 for conducting controls of the entire vehicle and outputs recognition results. As the information about the vehicle, there are, for example, the state (open or closed) of a vehicle door, the wearing state of the seat belt, the operation of brakes, the vehicle speed, and the steering angle. In this embodiment, based on the information outputted from the input/output means 190, the ECU 200 outputs actuation control signals to the occupant restraining means 210 as an operation device. As the occupant restraining means 210, there is, for example, an apparatus for restraining an occupant by such as an airbag and a seat belt. The occupant restraining means 210 corresponds to the "operation device" of the present invention. The ECU 200 for controlling the actuation of the occupant restraining means 210 corresponds to the "actuation control means" of the present invention. In addition to the occupant restraining means 210, the actuation of a warning device for outputting warning signals (display, sound and so on) and/or the actuation of a device for adjusting according to the attitude of the occupant (for example, a device of adjusting the level of a head rest of a seat) may be controlled by the ECU 200.

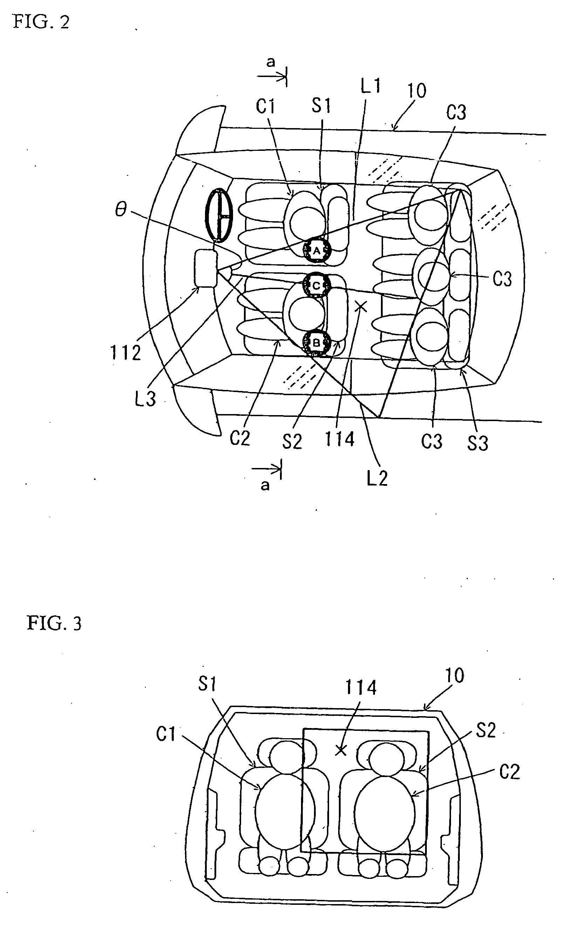

Hereinafter, the setting for viewing field of the camera 112 having the aforementioned structure will be specifically described with reference to Fig. 2 and Fig. 3. Fig. 2 shows a plan view of the viewing field 114 of the camera 112 of this embodiment and Fig. 3 is a view taken along a line a-a in a direction of arrows in Fig. 2. Fig. 2 and Fig. 3 show a case that a driver seat is on the right-hand side of a vehicle, i.e. a case of a vehicle with right-hand steering wheel.

As shown in Fig. 2 and Fig. 3, the camera 112 of this embodiment is a camera for taking single view point images from a point in front of front seats toward the rear side of the vehicle and corresponds to the "camera for taking images from a single view point in a cabin of a vehicle toward a rear side of the vehicle". The viewing field 114 of the camera 112 is set to cover an area defined between a sight line (first sight line L1 in Fig. 2) extending from the single view point toward the rear side of the vehicle through an occupant's left shoulder area (occupant's left shoulder area A in Fig. 2)of the driver seat S 1 and a sight line (second sight line L2 in Fig. 2) extending from the single view point toward the rear side of the vehicle through an occupant's left shoulder area (occupant's left shoulder area B in Fig. 2) of the front passenger seat S2. In this case, the viewing field of the camera 112 may be any field including the area defined between the first sight line L1 and the second sight line L2 so that the viewing field of the camera 112 may be a field exactly corresponding to the aforementioned area or a field wider than the field including the aforementioned area. The view point of the camera 112 may be positioned in front of the front seats toward the rear side of the vehicle or positioned over the front seats toward the rear side of the vehicle, for example, when the vehicle occupants move the front seats forward.

The occupant's left shoulder area A of the driver seat S 1 is defined as an area corresponding to the shoulder of the occupant when sitting in the driver seat S1. This area substantially coincides with an inner side end portion of the driver seat S1. Similarly, the occupant's left shoulder area B of the front passenger seat S2 is defined as an area corresponding to the shoulder of the occupant when sitting in the front passenger seat S2. This area substantially coincides with a door-side end portion of the front passenger seat S2. The occupant's left shoulder area A of the driver seat S1 is an area corresponding to the front-passenger-side (vehicle inner side) shoulder portion of the occupant C 1 from the center of the occupant C 1 sitting in the driver seat S1. The occupant's left shoulder area A corresponds to the "front-passenger-side shoulder area of the occupant sitting in the driver seat" of the present invention. On the other hand, the occupant's left shoulder area B of the front passenger seat S2 is an area corresponding to the door-side (vehicle outer side) shoulder portion of the occupant C2 from the center of the occupant C2 sitting in the front passenger seat S2. The occupant's left shoulder area B corresponds to the "door-side shoulder area of the occupant sitting in the front passenger seat".

It should be noted that the viewing field 114 of the camera 112 in case that a driver seat is on the left-hand side of a vehicle, i.e. a case of a vehicle with left-hand steering wheel is defined between a first sight line L1 extending from the single view point to the rear side of the vehicle through an occupant's right shoulder area of a driver seat S 1 and a second sight line L2 extending from the single view point to the rear side of the vehicle through an occupant's right shoulder area of a front passenger seat S2.

In this embodiment, the viewing angle θ of the viewing field 114 when seen from above is set to be lower than about 110 degrees. This setting of the viewing angle θ of the camera 112 allows the use of an inexpensive lens having average size and brightness, thereby allowing the reduction in cost of the system. In case of using an infrared lamp as an illumination of the camera 112, the reduction in viewing angle θ allows the reduction in range to be illuminated, thereby increasing the effect of reducing the quantity of light and power consumption.

The setting of the viewing field 114 of the camera 112 as mentioned above is based on the technical idea thought for making efficient use of the limited viewing field while limiting the viewing angle for reducing the cost of the system. In this embodiment, a larger part of the viewing field is allocated to the front passenger seat than the driver seat because occupants to be sitting in the front passenger seat may be a great variety of occupants including infants and adults while occupants to be sitting in the driver seat are essentially adults so it is rational to increase detected information about the front passenger seat than that about the driver seat.

Specifically, the range of the viewing field 114 of the camera 112 includes the occupant C2 on the front passenger seat S2. Further, the sight line (sight line L3 in Fig. 2) passing through the center of the viewing field of the camera 112 substantially coincides with the occupant's right shoulder area (occupant's right shoulder area C in Fig. 2) of the front passenger seat S2 so that the right half body of the occupant C2 is positioned in the central area of the viewing field of the camera 112. The central area of the viewing field is an area where image hardly becomes dark and is hardly distorted because of the characteristics of lens. The occupant's right shoulder area C of the front passenger seat S2 is defined as an area corresponding to the shoulder of the occupant when sitting in the front passenger seat S2. This area substantially coincides with an inner side end portion of the front passenger seat S2. The occupant's right shoulder area C of the front passenger seat S2 is an area corresponding to the driver-side (vehicle inner side) shoulder portion of the occupant C2 from the center of the occupant C2 sitting in the front passenger seat S2. The occupant's right shoulder area C corresponds to the "area about the front driver-side shoulder of the occupant sitting in the front passenger seat" of the present invention.

Therefore, since the upper body of the occupant C2 is all covered by the viewing field, information about the occupant C2 (the presence or absence, the size (physique class), and the positions of the head, shoulder, and the upper body of the occupant) can be detected. In addition, since the right half body of the occupant C2 is positioned in the central area of the viewing field of the camera 112, the detection accuracy for detecting information about the occupant C2 can be improved. This is based on the idea that since a human being has substantially right-left symmetrical profile, accurate information about the entire body of the occupant can be detected as long as images of the half body of the occupant are detected with accuracy. According to the setting for viewing field of this embodiment, the occupant C2 is covered by the viewing field even when the occupant C2 moves forward relative to the seat surface, thereby securely detecting the occupant C2. In this case, it is possible to detect (determine) at least one of various pieces of information about the occupant C2, typically to determine whether the occupant C2 is present or not. When it is determined that the occupant C2 is present, it is possible to determine at least one of other pieces of informations about the occupant.

As regards the viewing field 114 of the camera, the left shoulder of the occupant C1 on the driver seat S 1 is covered by the viewing field 114 of the camera 112. The anteroposterior position of the upper body of the occupant C1 relative to the steering wheel can be detected by detecting only the portion of the left shoulder, even not the entire upper body, of the occupant C1 based on the presupposition that the occupant C1 is an adult. According to this structure, the function(s) of existing sensor(s) such as a seat slide sensor for detecting the anteroposterior position of the driver seat S 1 can be replaced with the camera 112. If the seat slide sensor is used together with the camera 112, the position of the hip of the occupant can be detected in addition to the position of the upper body, thereby obtaining information about the occupant which can be used to serve many uses. In addition, the sitting height of the occupant can be calculated from the detected position of the shoulder and the detected position of the hip so that the physical size of the occupant can also be detected.

The occupant C1 on the driver seat S 1 may adjust the anteroposterior position of the driver seat S 1 for the positions of an accelerator and a brake. For this adjustment, a relatively big person moves the anteroposterior position of the driver seat S1 rearwards while a relatively small person moves the anteroposterior position of the driver seat S 1 forward. Therefore, the size (physique class) of the occupant can be detected indirectly by detecting the anteroposterior position of the upper body of the occupant C1.

Further, as regard the viewing field of the camera 112, the rear seat S3 is covered by the viewing field 114 and the rear seat S3 is positioned in an area near the central area of the viewing field of the camera 112 (where image hardly becomes dark and is hardly distorted because of the characteristics of lens). Therefore, information about an occupant C3, for example, the presence or absence, the size (physique class), the position, and the attitude of the occupant C3, and whether the occupant C3 is an adult or a child, can be detected without increasing the intensity of the illumination toward the rear seat S3 too much. In this case, at least one of various pieces of information about the occupant C3 may be detected (determined), typically whether the occupant C3 is present or not may be determined. When it is determined that the occupant C3 is present, at least one of other pieces of information about the occupant C3 may be determined.

Information detected by the object detecting system 100 having the aforementioned structure is transmitted to the ECU 200 shown in Fig. 1 continuously or at regular time intervals so that the ECU 200 controls the actuation of the occupant restraining means 210. For example, the restraining performance (occupant restraining mode) by the occupant restraining means 210 such as an airbag device and a seat belt device is altered according to the presence, the physical size, the position, and the attitude of a vehicle occupant. Specifically, the physique class of the occupant C2 is estimated based on the information about the size and the position of the occupant C2 as information about the occupant C2 on the front passenger seat. Then, according to the estimated physique class, the restraining performance (occupant restraining mode) can be controlled to be altered by changing the energy absorbing capacity of the airbag and/or the seat belt and/or changing the deployment speed of the airbag. Further, the physique class of the occupant C 1 may be estimated based on the information of the position of the occupant C 1 as the information about the occupant C1 on the driver seat S 1 and, according to the estimated physique class, the energy absorbing capacity of the airbag and/or the seat belt may be changed and/or the deployment speed of the airbag may be changed, thereby achieving the control for altering the restraining performance (occupant restraining mode).

According to this embodiment, a control of actuating the occupant restraining means 210 only when there is a vehicle occupant on any of the vehicle seats is enabled by detecting the presence of the vehicle occupant on the vehicle seat. Therefore, undesired actuation of the occupant restraining means 210 can be prevented. When the presence of vehicle occupants on the front seats (the driver seat S 1 and the front passenger seat S2) and the rear seat S3 are detected, a control of urging the occupant(s) not wearing a seat belt to wear the seat belt by the warning device which outputs warning signals (display, sound and so on) may also be conducted.

As mentioned above, according to the object detecting system 100 of this embodiment, the detection accuracy of the vehicle occupant can be improved even with reducing the cost by using the camera 112 having limited viewing angle. In addition, a larger part of the viewing field is allocated to the occupant C2 on the front passenger seat S2, whereby a large quantity of information about the occupant C2 on the front passenger seat S2 can be obtained as compared to the occupant C1 on the driver seat S 1 so as to achieve rationalized setting for viewing field of the camera 112.

Further, according to the object detecting system 100 of this embodiment, the sight line L3 passing through the center of the viewing field of the camera 112 substantially coincides with the occupant's right shoulder area C of the front passenger seat S2 so that the right half body of the occupant C2 is positioned in the central area of the viewing field of the camera 112, thereby enabling further accurate detection of desired information about the occupant C2.

Further, according to the object detecting system 100 of this embodiment, the viewing angle of the camera 112 is set to be lower than about 110 degrees, thereby allowing the use of an inexpensive lens having average size and brightness and thus allowing the reduction in cost of the system.

Further, according to the object detecting system 100 of this embodiment, the occupant restraining means 210 is controlled to be actuated in a suitable mode according to detection results of the object detecting system, thereby enabling detailed control for the occupant restraining means 210.

Furthermore, according to this embodiment, there is provided a vehicle mounted with the object detecting system 100 capable of conducting rational setting of the viewing field of the camera 112.

### Another embodiment

The present invention is not limited to the aforementioned embodiment and various applications and modifications may be made. For example, the following respective embodiments based on the aforementioned embodiment may be carried out.

In the present invention, the object to be detected through the camera 112 includes a vehicle occupant, an object placed on a vehicle seat, a child seat, and a junior seat. In this case, information about the object includes information about presence, the size, the position, and the attitude of the object.

Though the aforementioned embodiment has been described with regard to the arrangement of the object detecting system to be installed in an automobile, the present invention can be adopted to object detecting systems to be installed in various vehicles other than automobile such as an airplane, a boat, a train, a bus, a truck, and the like.

## Claims

1. An object detecting system for detecting information about objects (C1-C3) on vehicle seats (S1-S3), comprising:
a camera (112) for taking images from a single view point in a cabin of a vehicle (10) toward a rear side of the vehicle (10); and
a processing means (120) for deriving information about the objects (C1-C3) on the vehicle seats (S1-S3) based on images taken by the camera (112),
a viewing field (114) of the camera (112) is set such that the viewing field (114) is defined between a first sight line (L1) extending from the single view point toward the rear side of the vehicle (10) through a front-passenger-side shoulder area (A) of an occupant (C1) sitting on the driver seat (S1) and a second sight line (L2) extending from the single view point toward the rear side of the vehicle (10) through a door-side shoulder area (B) of an occupant (C2) sitting on the front passenger seat (S2), and
**characterized in that**
the camera (112) is set such a third sight line (L3) of the camera (112) passing through the center of the viewing field of the camera (112) coincides with an area (C) about a driver-side shoulder portion of the occupant (C2) sitting on the front passenger seat (S2).

2. An object detecting system as claimed in claim 1, wherein a viewing angle (Θ) of the viewing field (114) of the camera (112) when seen from above is set to be lower than about 110 degrees.

3. An object detecting system as claimed in claim 1 or claim 2, wherein the processing means (120) detects respective halves of the object (C1) on the driver seat (S1) and the object (C2) on the front passenger seat (S2) based on the images obtained by the camera (112) having the viewing field (114) defined between the first sight line (L1) and the second sight line (L2) and thereby determines at least one of the presence, the size, the position, and the attitude of each object (C1, C2).

4. An object detecting system as claimed in any one of claims 1 through 3, wherein each object (C1-C3) on the vehicle seats (S1-S3) is identified at least based on distances from the camera (112) to the surface of the object (C1-C3) or the three-dimensional profile of the object (C1-C3).

5. An operation device control system comprising:
an object detecting system (100) as claimed in any one of claims 1 through 4;
an operation device (210) which is operated based on the information about the objects (C1-C3) on the vehicle seats (S1-S3) derived by the processing means (120) of the object detecting system (100); and
an actuation control means (200) for controlling the actuation of the operation device (210).

6. A vehicle comprising an engine/running system; an electrical system; an actuation control device (200) for conducting the actuation control of the engine/running system and the electrical system; and an object detecting means (100) for detecting information about objects (C1-C3) on vehicle seats (S1-S3), wherein
the object detecting means comprises an object detecting system (100) as claimed in any one of claims 1 through 4.

7. An object detecting method for detecting information about objects (C1-C3) on vehicle seats (S1-S3) by using a camera (112) capable of taking images from a single view point in a cabin of a vehicle (10) toward a rear side of the vehicle (10), comprising the steps
setting the camera (112) such that a viewing field (114) of the camera (112) is defined between a first sight line (L1) extending from the single view point toward the rear side of the vehicle (10) through a front-passenger-side shoulder area (A) of an occupant (C1) sitting on the driver seat (S1) and a second sight line (L2) extending from the single view point toward the rear side of the vehicle (10) through a door-side shoulder area (B) of an occupant (C2) sitting on the front passenger seat (S2) so that a larger part of the viewing field (114) is allocated to an object (C2) on the front passenger seat (S2) than an object (C1) on the driver seat (S1), and **characterised in that** said method comprises setting the camera (112) such that a third sight line (L3) of the camera (112) passing through the center of the viewing field (114) of the camera (112) substantially coincides with an area (C) about a driver-side shoulder of the occupant (C2) sitting in the front passenger seat (S2).

8. An object detecting method as claimed in claim 7, wherein, as regards the setting of the camera (112), the viewing angle (Θ) of the viewing field (114) of the camera (112) when seen from above is set to be lower than about 110 degrees.

9. An object detecting method as claimed in claim 7 or claim 8, wherein respective halves of the object (C1) on the driver seat (S1) and the object (C2) on the front passenger seat (S2) are detected based on the images obtained by the camera (112) having the viewing field (114) defined between the first sight line (L1) and the second sight line (L2) and at least one of the presence, the size, the position, and the attitude of each object (C1; C2) is determined based on the detected halves.

10. An object detecting method as claimed in any one of claims 7-9, wherein each object (C1-C3) on the vehicle seats (S1-S3) is identified at least based on distances from the camera (112) to the surface of the object (C1-C3) or the three-dimensional profile of the object (C1-C3).

## Patentansprüche

1. Objekterfassungssystem zum Erfassen von Informationen über Objekte (C1-C3) auf Fahrzeugsitzen (S1-S3), umfassend:
eine Kamera (112) zur Aufnahme von Bildern von einem einzelnen Beobachtungspunkt in einer Kabine eines Fahrzeugs (10) aus in Richtung einer Rückseite des Fahrzeugs (10); und
Verarbeitungsmittel (120) zum Herleiten von Informationen über die Objekte (C1-C3) auf den Fahrzeugsitzen (S1-S3) basierend auf den von der Kamera (112) aufgenommenen Bildern,
wobei ein Sichtfeld (114) der Kamera (112) so festgelegt ist, dass das Sichtfeld (114) zwischen einer ersten Sichtlinie (L1), welche sich von dem einzelnen Beobachtungspunkt in Richtung der Hinterseite des Fahrzeugs (10) durch einen beifahrerseitigen Schulterbereich (A) eines Insassen (C1), welcher auf dem Fahrersitz (S1) sitzt, erstreckt, und einer zweiten Sichtlinie (L2), welche sich von dem einzigen Beobachtungspunkt in Richtung der Rückseite des Fahrzeugs (10) durch einen türseitigen Schulterbereich (B) eines Insassen (C2), welcher auf dem Beifahrersitz (S2) sitzt erstreckt, festgelegt ist, und
**dadurch gekennzeichnet,**
**dass** die Kamera (112) so eingestellt ist, dass eine dritte Sichtlinie (L3) der Kamera, welche durch die Mitte des Sichtfeldes der Kamera (112) verläuft, mit einem Bereich (C) um einem fahrseitigen Schulterabschnitt des Insassen (C2), welcher auf dem Beifahrersitz (S2) sitzt zusammenfällt

2. Objekterfassungssystem wie in Anspruch 1 beansprucht, wobei ein Betrachtungswinkel (θ) des Sichtfeldes (114) der Kamera (112), wenn von oben betrachtet, kleiner ist als ca. 110 Grad.

3. Objekterfassungssystem wie in Anspruch 1 oder Anspruch 2 beansprucht, wobei das Verarbeitungsmittel (112) jeweilige Hälften von dem Objekt (C1) auf dem Fahrersitz (S1) und dem Objekt (C2) auf dem Beifahrersitz basierend auf den durch die Kamera (112), welche das zwischen der ersten Sichtlinie (L1) und der zweiten Sichtlinie (L2) definierte Sichtfeld (114) aufweist, erhaltenen Bildern erfasst und dadurch zumindest eines von der Anwesenheit, der Größe, der Position, und der Haltung eines jeden Objekts (C1, C2) bestimmt.

4. Objekterfassungssystem wie in einem der Ansprüche 1 bis 3 beansprucht, wobei jedes Objekt (C1-C3) auf den Fahrzeugsitzen (S1-S3) zumindest basierend auf Abständen von der Kamera (112) zu der Oberfläche des Objekts (C1-C2) oder dem dreidimensionalen Profil des Objekts (C1-C3) identifiziert ist.

5. Betriebsvorrichtungssteuerungssystem umfassend:
ein Objekterfassungssystem (100) wie in einem der Ansprüche 1 bis 4 beansprucht;
eine Betriebsvorrichtung (210), welche basierend auf den Informationen über die Objekte (C1-C3) auf den Fahrzeugsitzen (S1-S3), welche durch die Verarbeitungsmittel (120) des Objekterfassungssystems (100) hergeleitet werden, betrieben wird; und
ein Betätigungssteuerungsmittel (200) zur Steuerung der Betätigung der Betriebsvorrichtung (210).

6. Fahrzeug, umfassend
ein Motor/Betriebs-System;
ein elektrisches System;
ein Betätigungssteuerungsanordnung (200) zum Durchführen der Betätigungssteuerung des Motor/Betriebs-Systems und des elektrischen Systems; und
ein Objekterfassungsmittel (100) zum Erfassen von Informationen über Objekte (C1-C3) auf dem Fahrzeugsitzen (S1-S3), wobei das Objekterfassungsmittel ein Objekterfassungssystem (100) wie in einem der Ansprüche 1 bis 4 beansprucht, umfasst.

7. Objekterfassungsverfahren zum Erfassen von Information über Objekte (C1-C3) auf Fahrzeugsitzen (S1-S3) durch Verwenden einer Kamera (112), welche imstande ist, Bilder von einem einzelnen Beobachtungspunkt in einer Kabine eines Fahrzeugs (10) aus in Richtung einer Hinterseite des Fahrzeugs (10) aufzunehmen, umfassend die Schritte:
Einrichten der Kamera (112), so dass ein Sichtfeld (114) der Kamera (112) zwischen einer ersten Sichtlinie (L1), welche sich von dem einzelnen Beobachtungspunkt in Richtung der Hinterseite des Fahrzeugs durch einem beifahrerseitigen Schulterbereich (A) eines Insassen (C1), welcher auf dem Fahrersitz (S1) sitzt, erstreckt, und einer zweiten Sichtlinie (L2), welche sich von dem einzigen Beobachtungspunkt in Richtung der Rückseite des Fahrzeugs (10) durch einen türseitigen Schulterbereich (B) eines Insassen (C2), welcher auf dem Beifahrersitz (S2) sitzt, erstreckt, festgelegt ist, so dass ein größere Teil des Sichtfelds (114) einem Objekt (C2) auf dem Beifahrersitz (S2) zugewiesen als dem Objekt (C1) auf dem Fahrersitz (S1) wird, und
**dadurch gekennzeichnet,**
**dass** das Verfahren umfasst
Einrichten der Kamera (112) so, dass eine dritte Sichtlinie (L3) der Kamera (112), welche durch die Mitte des Sichtfeldes (114) der Kamera verläuft, im Wesentlichen mit einem Bereich (C) um eine fahrerseitige Schulter des Insassen (C2), welcher auf dem Beifahrersitz (S2) sitzt, zusammenfällt.

8. Objekterfassungsverfahren wie in Anspruch 7 beansprucht, wobei bezüglich des Einrichtens der Kamera (112) der Betrachtungswinkel (θ) des Sichtfeldes (114) der Kamera (112), wenn von oben betrachtet, kleiner ist als ca. 110 Grad.

9. Objekterfassungsverfahren wie in Anspruch 7 oder Anspruch 8 beansprucht, wobei jeweilige Hälften von dem Objekt (C1) auf dem Fahrersitz (S1) und dem Objekt (C2) auf dem Beifahrersitz (S2) basierend auf den von der Kamera (112), welche das zwischen der ersten Sichtlinie (L1) und der zweiten Sichtlinie (L2) definierte Sichtfeld (114) aufweist, erhaltenen Bildern erfasst werden und zumindest eines von der Anwesenheit, der Größe, der Position, und der Haltung eines jeden Objekts (C1, C2) basierend auf den erfassten Hälften bestimmt wird.

10. Objekterfassungsverfahren wie in einem der Ansprüche 7-9 beansprucht, wobei jedes Objekt (C1-C3) auf den Fahrzeugsitzen (S1-S3) zumindest basierend auf Abständen von der Kamera (112) zu der Oberfläche des Objekts (C1-C3) oder dem dreidimensionalen Profil des Objekts (C1-C3) identifiziert wird.

## Revendications

1. Système de détection d'objet pour détecter des informations sur des objets (C1-C3) sur des sièges de véhicule (S1-S3), comprenant :
une caméra (112) pour prendre des images depuis un point de vue unique dans un habitacle d'un véhicule (10) en direction d'un côté arrière du véhicule (10) ; et
un moyen de traitement (120) pour déduire des informations sur les objets (C1-C3) sur les sièges de véhicule (S1-S3) sur la base des images prises par la caméra (112),
un champ de vision (114) de la caméra (112) étant réglé de sorte que le champ de vision (114) soit défini entre une première ligne de visée (L1) s'étendant depuis l'unique point de vue en direction du côté arrière du véhicule (10) à travers une zone d'épaule côté passager avant (A) d'un occupant (C1) assis sur le siège du conducteur (S1) et une deuxième ligne de visée (L2) s'étendant depuis l'unique point de vue en direction du côté arrière du véhicule (10) à travers une zone d'épaule côté portière (B) d'un occupant (C2) assis sur le siège du passager avant (S2), et
**caractérisé en ce que**
la caméra (112) est réglée de sorte qu'une troisième ligne de visée (L3) de la caméra (112) passant par le centre du champ de vision de la caméra (112) coïncide avec une zone (C) autour d'une zone d'épaule côté conducteur de l'occupant (C2) assis sur le siège du passager avant (S2).

2. Système de détection d'objet selon la revendication 1, dans lequel un angle de vision (Θ) du champ de vision (114) de la caméra (112), lorsqu'il est vu de dessus, est réglé inférieur à environ 110 degrés.

3. Système de détection d'objet selon la revendication 1 ou la revendication 2, dans lequel le moyen de traitement (120) détecte des moitiés respectives de l'objet (C1) sur le siège du conducteur (S1) et l'objet (C2) sur le siège du passager avant (S2) sur la base des images obtenues par la caméra (112) ayant le champ de vision (114) défini entre la première ligne de visée (L1) et la deuxième ligne de visée (L2) et détermine au moins un parmi la présence, la taille, la position et l'attitude de chaque objet (C1, C2).

4. Système de détection d'objet selon l'une quelconque des revendications 1 à 3, dans lequel chaque objet (C1-C3) sur les sièges du véhicule (S1-S3) est identifié au moins sur la base des distances de la caméra (112) à la surface de l'objet (C1-C3) ou du profil tridimensionnel de l'objet (C1-C3).

5. Système de commande de dispositif opérationnel comprenant :
un système de détection d'objet (100) selon l'une quelconque des revendications 1 à 4 ;
un dispositif opérationnel (210) qui est opérationnel sur la base des informations sur les objets (C1-C3) sur les sièges du véhicule (S1-S3) déduites par le moyen de traitement (120) du système de détection d'objet (100) ; et
un moyen de commande d'actionnement (200) pour commander l'actionnement du dispositif opérationnel (210).

6. Véhicule comprenant un moteur/système d'entraînement ; un système électrique ; un dispositif de commande d'actionnement (200) pour diriger la commande d'actionnement du moteur/système d'entraînement et du système électrique ; et un moyen de détection d'objet (100) pour détecter des informations sur des objets (C1-C3) sur des sièges de véhicule (S1-S3), dans lequel
le moyen de détection d'objet comprend un système de détection d'objet (100) selon l'une quelconque des revendications 1 à 4.

7. Procédé de détection d'objet pour détecter des informations sur des objets (C1-C3) sur des sièges de véhicule (S1-S3) à l'aide d'une caméra (112) capable de prendre des images depuis un point de vue unique dans un habitacle d'un véhicule (10) en direction d'un côté arrière du véhicule (10), comprenant les étapes suivantes :
réglage de la caméra (112) de sorte qu'un champ de vision (114) de la caméra (112) soit défini entre une première ligne de visée (L1) s'étendant du point de vue unique en direction du côté arrière du véhicule (10) à travers une zone d'épaule côté passager avant (A) d'un occupant (C1) assis sur le siège du conducteur (S1) et une deuxième ligne de visée (L2) s'étendant du point de vue unique en direction du côté arrière du véhicule (10) à travers une zone d'épaule côté portière (B) d'un occupant (C2) assis sur le siège du passager avant (S2) de sorte qu'une plus grande partie du champ de vision (114) soit allouée à un objet (C2) sur le siège du passager avant (S2) qu'à un objet (C1) sur le siège du conducteur (S1), et **caractérisé en ce que** ledit procédé comprend le réglage de la caméra (112) de sorte qu'une troisième ligne de visée (L3) de la caméra (112) passant par le centre du champ de vision (114) de la caméra (112) coïncide sensiblement avec une zone (C) autour d'une épaule côté conducteur de l'occupant (C2) assis sur le siège du passager avant (S2).

8. Procédé de détection d'objet selon la revendication 7, dans lequel, en ce qui concerne le réglage de la caméra (112), l'angle de vision (Θ) du champ de vision (114) de la caméra (112), lorsqu'il est vu de dessus, est réglé pour être inférieur à environ 110 degrés.

9. Procédé de détection d'objet selon la revendication 7 ou la revendication 8, dans lequel des moitiés respectives de l'objet (C1) sur le siège du conducteur (S1) et de l'objet (C2) sur le siège du passager avant (S2) sont détectées sur la base des images obtenues par la caméra (112) ayant le champ de vision (114) défini entre la première ligne de visée (L1) et la seconde ligne de visée (L2) et au moins la présence et/ou la taille et/ou la position et/ou l'attitude de chaque objet (C1 ; C2) est(sont) déterminée(s) sur la base des moitiés détectées.

10. Procédé de détection d'objet selon l'une quelconque des revendications 7 à 9, dans lequel chaque objet (C1-C3) sur les sièges de véhicule (S1-S3) est identifié au moins sur la base des distances de la caméra (112) à la surface de l'objet (C1-C3) ou du profil tridimensionnel de l'objet (C1-C3).
